# EUROPEAN PATENT SPECIFICATION

(11) **EP 2 728 758 B1**
(45) Date of publication and mention of the grant of the patent: **29.04.2015**
(21) Application number: 13185799.7
(22) Date of filing: 24.09.2013
(51) Int. Cl.: H04B 1/00, H04B 7/08, H04B 7/185

(54) **Broadcast receiver and method of operating the same to avoid muting caused by memory reallocation**
Rundfunkempfänger und Betriebsverfahren dafür zur Vermeidung von Stummschalten durch Speicherneuzuweisung
Récepteur de diffusion et son procédé de fonctionnement pour éviter la mise en sourdine provoquée par la réaffectation de mémoire

(30) Priority: 31.10.2012 US 201213664742
(43) Date of publication of application: 07.05.2014
(73) Proprietor: Delphi Technologies, Inc., Troy MI 48007 (US)
(72) Inventor: Hiatt Jr., Michael L., Westfield, IN Indiana 46074 (US); Dibiaso, Eric A., Lebanon, PA Pennsylvania 17042 (US); Mcdanell, Roger A., Carmel, IN Indiana 46033 (US)
(74) Representative: Neill, Andrew Peter

(56) References cited:
- JP-A- 2009 005 298

## Description

### TECHNICAL FIELD OF INVENTION

This disclosure generally relates to a broadcast receiver configured to receive both a terrestrial signal and a satellite signal, and more particularly relates to a method of operating a memory in the receiver in a manner that avoids muting an output signal from the receiver.

### BACKGROUND OF INVENTION

The Digital Video Broadcasting - Satellite services to Handhelds (DVB-SH) standards provide operating specifications for receivers that receive both terrestrial-sourced signals and satellite-sourced signals. The DVB-SH standard allows for signal formats or modulation schemes that have different interleaver depths. These varying interleaver depths can cause the memory allocation requirements for signal processing memory to vary. As there often is no fixed interleaver depth or time alignment specified in standards for hybrid (satellite/terrestrial) receivers, the initial memory allocation for a particular buffer (e.g. terrestrial alignment buffer, terrestrial interleaver buffer, satellite alignment buffer, or satellite interleaver buffer) may need to be adjusted/determined after the terrestrial or satellite signals are detected. If any initial buffer size is too small and that buffer is located in memory between other buffers, increasing the size of that buffer may require relocating or shifting the other buffers. This relocation or shifting of the other buffers may cause the contents of the other buffers to be lost, thereby potentially causing the receiver output to be muted, i.e. - no receiver output signal. In other words, unexpected sized changes of time alignment and/or interleaver buffers in a conventional memory allocation scheme may cause the overall alignment/interleaver memory footprint to be modified when, for example, changing from a terrestrial only environment to a hybrid (terrestrial and satellite combined) or satellite only environment. Such a change may cause the output of the receiver to mute due to the loss of the information that had been filling, for example, the terrestrial interleaver buffer to that point.

The document JP 2009-005298 is considered as the closest prior art.

### SUMMARY OF THE INVENTION

In accordance with one embodiment, a hybrid broadcast receiver is provided. The hybrid broadcast receiver is configured to receive both a terrestrial signal broadcast by a terrestrial transmitter and a satellite signal broadcast by a satellite transmitter. The receiver includes a processor and a memory. The processor is configured to process terrestrial data received from the terrestrial signal and satellite data received from the satellite signal. The memory is coupled to the processor effective to store the terrestrial data and the satellite data. The processor is configured to store terrestrial data from the terrestrial signal in a terrestrial portion of the memory. The terrestrial portion includes a top end of the memory. The processor is also configured to store satellite data from the satellite signal in a satellite portion of the memory. The satellite portion includes a bottom end of the memory.

In one embodiment the processor is further configured to store terrestrial data from the terrestrial signal in the terrestrial portion of the memory by associating a first terrestrial address with the top end of the memory, and associating subsequent terrestrial addresses by incrementing a terrestrial address pointer relative to the first terrestrial address. The processor is also further configured to store satellite data from the satellite signal in the satellite portion of the memory by associating a first satellite address with the bottom end of the memory, and associating subsequent satellite addresses by decrementing a satellite address pointer relative to the first satellite address.

In another embodiment, a method of operating a memory is provided. The memory is used to store received data being processed in a hybrid broadcast receiver configured to receive both a terrestrial signal broadcast by a terrestrial transmitter and a satellite signal broadcast by a satellite transmitter. The method includes the step of storing terrestrial data from the terrestrial signal in a terrestrial portion of the memory. The terrestrial portion includes a top end of the memory. The method also includes the step of storing satellite data from the satellite signal in a satellite portion of the memory. The satellite portion includes a bottom end of the memory.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a communication system having a vehicle equipped with a receiver in accordance with one embodiment;
Figs. 2A - 2C are diagrams of memory allocation of memory in the receiver of Fig. 1 in accordance with one embodiment; and
Fig. 3 is a flowchart of a method for operating the memory of Fig. 1 and 2 in accordance with one embodiment.

### DETAILED DESCRIPTION

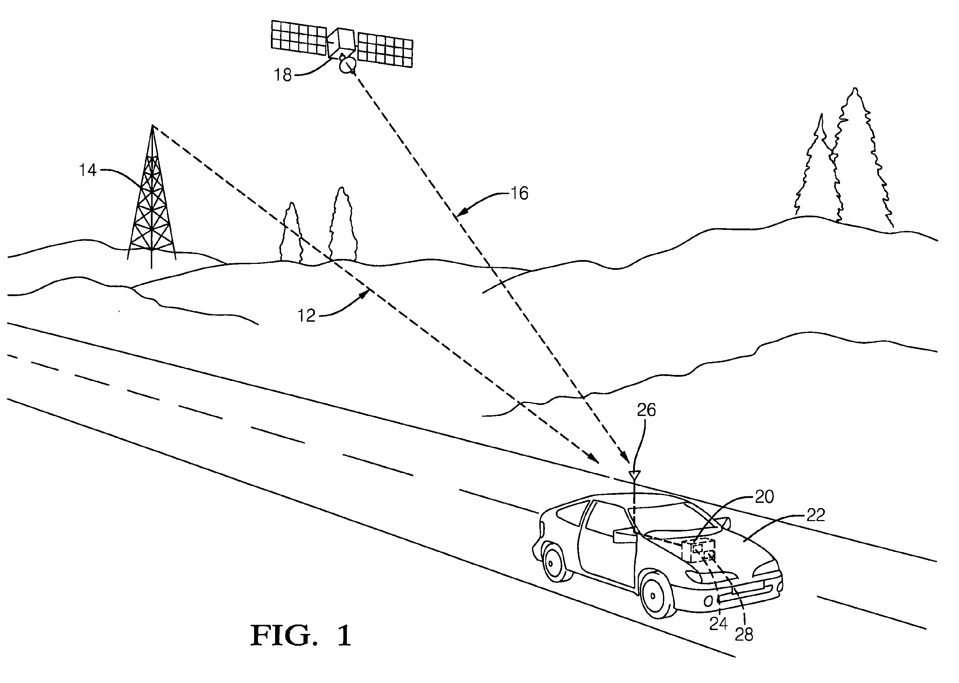

Fig. 1 illustrates a non-limiting example of a communication system, hereafter the system 10. The system 10 is generally configured to communicate a terrestrial signal 12 broadcast by a terrestrial transmitter 14 and a satellite signal 16 broadcast by a satellite transmitter 18. The system 10 may include a hybrid broadcast receiver, hereafter the receiver 20. In this non-limiting example, the receiver 20 is illustrated as being installed in a vehicle 22. However, the teachings presented herein are also applicable to receivers adapted for other situations such as a hand held receiver configured to receive video broadcast signals, or a portable receiver configured to receive audio and/or digital data broadcast signals The receiver 20 is generally configured to receive both the terrestrial signal 12 and the satellite signal 16. However, it is not necessary for the receiver 20 to receive both the terrestrial signal 12 and the satellite signal 16 to output a receiver signal (not shown). For example, if the receiver 20 is located in a rural area, only the satellite signal 16 may be available and so the receiver may output a receiver signal based only on the satellite signal. Conversely, if the receiver 20 is located in an urban area where the satellite signal 16 is blocked by a building or roadway overpass (e.g. the vehicle traveling under a bridge or in a multilevel parking structure), the receiver 20 may output a receiver signal based only on the terrestrial signal 12.

The receiver 20 may include a processor 24 configured to process terrestrial data received from or extracted from the terrestrial signal 12, and satellite data received from or extracted from the satellite signal 16. The processor 24 may be a microprocessor or other control circuitry as should be evident to those in the art. One or more routines may be executed by the processor 24 to perform steps for determining if signals are received by an antenna 26 coupled to the receiver 20 as described herein.

The receiver 20 may include a memory 28 coupled to the processor 24. In general, the memory 28 is used to store a variety of data including, but not limited to the terrestrial data based on the terrestrial signal 12 and the satellite data based on the satellite signal 16. By way of example and not limitation, the memory 28 may be configured or allocated to store a terrestrial alignment buffer, a terrestrial interleaver buffer, a satellite alignment buffer, and a satellite interleaver buffer.

Traditionally, these various buffers would be arranged contiguously, one after another in memory, typically starting from the top of memory (i.e. - the lowest memory pointer address), and progressing down into memory (i.e. - with increasing pointer addresses). However, if after the traditional memory allocation is performed, one or more of the buffer sizes needs to be increased because the signal received has an unexpected format, the traditional approach would be to shift or move the subsequent buffers (i.e. the buffers located lower in memory than the buffer needing a size change) downward in memory, possibly causing a loss of memory content because the processor is fully occupied with processing the incoming signals. Such a loss of content may cause the receiver to mute (i.e. the receiver to stop outputting a receiver signal). In order to overcome this problem, Applicants devised a way to allocate memory that avoids having to shift buffers already containing data.

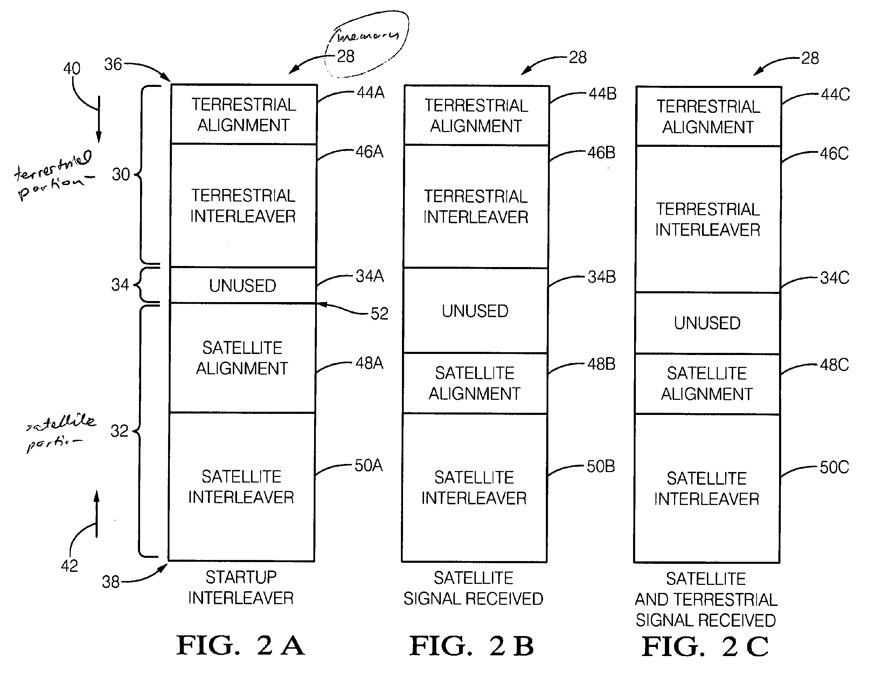

Figs. 2A-2C illustrate a non-limiting example of how to allocate the memory 28 in order to avoid loss of memory content and/or muting of the receiver 20 if the terrestrial buffers or the satellite buffers need a size increase upon detecting the terrestrial signal 12 or the satellite signal 16.

Fig. 2A illustrates a non-limiting example of an initial or startup memory allocation of the memory 28. As used herein, the startup memory allocation is generally a predetermined allocation that is done without foreknowledge of the format of the terrestrial signal 12 or the satellite signal 16. The startup memory allocation may define a terrestrial portion 30 having one end of the terrestrial portion 30 at one end, for example a top end 36 or first addressable location of the memory 28. The startup memory allocation may also define a satellite portion 32 of the memory 28 having one end of the satellite portion 32 at an opposite end, for example a bottom end 38 or last addressable location of the memory 28. This allotment of the memory 28 differs from traditional allotment schemes because an unused portion 34 of the memory is situated in the middle of the memory 28, between the terrestrial portion 30 and the satellite portion 32 instead of at an end (the top end 36 or the bottom end 38) of the memory 28. In a traditional allotment, the portions are arranged adjacent to one another. It should be appreciated that relative positioning of the terrestrial portion 30 and the satellite portion 32 in memory could be switched and the teachings presented herein would still be applicable.

Continuing with the non-limiting example, the processor 24 is generally configured to store terrestrial data from the terrestrial signal 12 in the terrestrial portion 30 of the memory 28 by starting at the top end 36 of the memory 28 and addressing or pointing to locations in the memory 28 relative to the top end 36 in a downward direction as indicated by down arrow 40 by incrementing a memory pointer. Similarly, the processor 24 may store satellite data from the satellite signal 16 in the satellite portion of the memory 28 by starting at a first location 52 of the satellite portion 32 of the memory 28 and addressing or pointing to locations in the memory 28 relative to the first location 52 in a downward direction as indicated by down arrow 40 by incrementing a memory pointer.

Alternatively, the processor 24 may be configured to store satellite data from the satellite signal 16 in the satellite portion 32 of the memory 28 by starting at the bottom end 38 of the memory 28 and addressing or pointing to locations in the memory 28 relative to the bottom end 38 in an upward direction as indicated by up arrow 42 by decrementing a memory pointer. It should be appreciated that the terrestrial portion 30 of the memory 28 may include or define an initial terrestrial alignment buffer 44A and an initial terrestrial interleaver buffer 46A, and the satellite portion 32 of the memory may include or define an initial satellite alignment buffer 48A and an initial satellite interleaver buffer 50A, as is known in the broadcast reception arts.

Fig. 2B illustrates a non-limiting example of how the various buffer sizes may change after the satellite signal 16 is detected or found relative to the startup allotment presented in Fig. 2A. In this example, the satellite signal 16 is formatted such that size of the satellite interleaver buffer 50B is unchanged relative to the initial satellite interleaver buffer 50A, but the satellite alignment buffer 48B is smaller than the initial satellite alignment buffer 48A. The terrestrial alignment buffer 44B is unchanged relative to the initial terrestrial alignment buffer 44A, and the terrestrial interleaver buffer 46B is unchanged relative to the initial terrestrial interleaver buffer 46A because the terrestrial signal 12 has not been received. It follows that the size of the unused portion 34B increases relative to the initial unused portion 34A.

If a traditional, contiguous allotment had been used with the satellite portion 32 starting at the top end 36 followed immediately by the terrestrial portion 30, reducing the size of the initial satellite alignment buffer 48A to the size indicated by the satellite alignment buffer 48B may have caused the terrestrial portion 30 to be shifted upwards. However since no terrestrial signal had yet been detected in this example, muting of the receiver 20 would fortunately be avoided.

Fig. 2C illustrates a non-limiting example of further buffer size changes when the receiver 20 transitions from only the satellite signal 16 being received illustrated in Fig. 2B to both the satellite signal 16 and the terrestrial signal 12 being received. In this example, the format of the terrestrial signal 12 is such that the size of the terrestrial interleaver buffer 46C is larger than the initial terrestrial interleaver buffer 46A. It follows that the size of the unused portion 34C decreases relative to the unused portion 34B. Since the allotment or arrangement of the various buffers is such that unused portion 34 is between the terrestrial portion 30 and the satellite portion 32, increasing the size of the terrestrial interleaver buffer 46C relative to the terrestrial interleaver buffer 46B does not give rise to relocating or shifting of the satellite alignment buffer 48C or the satellite interleaver buffer 50C. As such, muting of the receiver 20 is avoided.

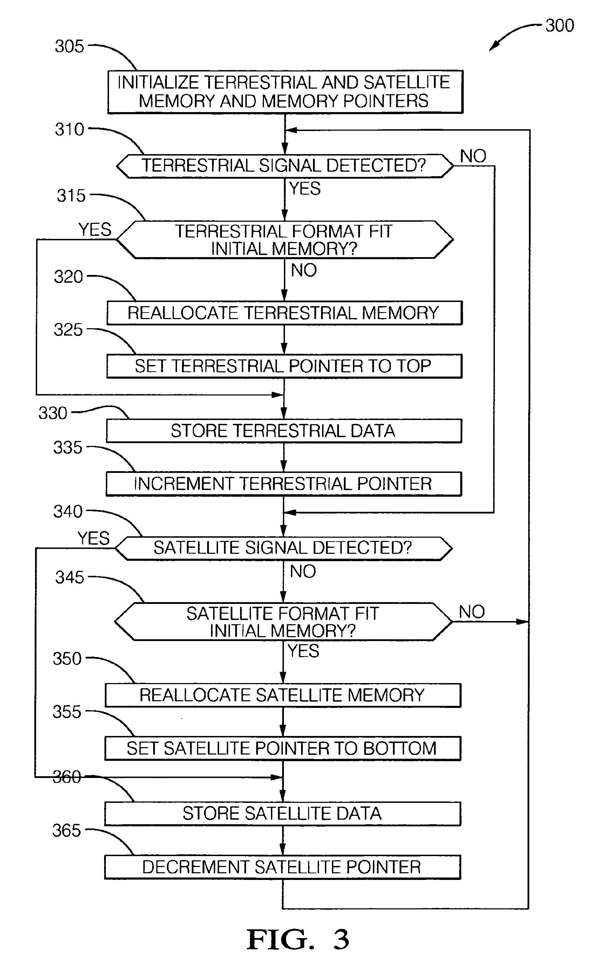

Fig. 3 illustrates a non-limiting method 300 of operating the memory 28 used to store received data being processed in a hybrid broad cast receiver (the receiver 20) configured to receive both wherein the terrestrial portion comprises a terrestrial alignment buffer and a terrestrial interleaver buffer, and the satellite portion comprises a satellite alignment buffer and a satellite interleaver buffer broadcast by a satellite transmitter 18. An advantage of the method 300 is that it helps avoid muting by the receiver 20 if the format of the terrestrial signal 12 and/or the satellite signal 16 is different from what was expected.

Step 305, INITIALIZE TERRESTRIAL AND SATELLITE MEMORY AND MEMORY POINTERS, may include predefining or reserving portions of the memory 28. The parameters of initializing the memory may be based on data programmed into the receiver 20 when the receiver was manufactured, or may be based on the allocation of the terrestrial portion 30, the satellite portion 32, and the unused portion 34 from the last time the receiver 20 was used (i.e. powered). The initialization may include defining an initial terrestrial alignment buffer 44A and an initial terrestrial interleaver buffer 46A within the terrestrial portion 30, and defining an initial satellite alignment buffer 48A and an initial satellite interleaver buffer 50A within the satellite portion 32. Initializing the memory pointers may include setting a terrestrial memory pointer to correspond to the first memory location in the memory 28, and setting a satellite memory pointer to correspond to the last memory location in the memory 28.

Step 310, TERRESTRIAL SIGNAL DETECTED?, may include the receiver 20 determining that the terrestrial signal 12 is being received with, for example, sufficient signal strength or signal to noise ratio to be suitable for generating or contributing to a receiver signal output by the receiver 20.

Step 315, TERRESTRIAL FORMAT FIT INITIAL MEMORY?, may include determining if the terrestrial signal 12 being received has a format that corresponds to the initial memory configuration established in step 305. If the memory configuration is suitable (YES), the method 300 proceeds to step 330. If not (NO), then the terrestrial portion 30 may need to be reallocated.

Step 320, REALLOCATE TERRESTRIAL MEMORY, may include the processor 24 adjusting the size of the terrestrial alignment buffer (44A-C) and or the terrestrial interleaver buffer (46A-C) to provide sufficient memory for processing the terrestrial signal 12.

Step 325, SET TERRESTRIAL POINTER TO TOP, may include a terrestrial pointer value in the processor 24 (not shown) to a memory address corresponding to the top of the memory 28.

Step 330, STORE TERRESTRIAL DATA, may include storing terrestrial data from the terrestrial signal 12 in a terrestrial portion 30 of the memory 28, for example at the location in the memory corresponding to the terrestrial pointer value.

Step 335, INCREMENT TERRESTRIAL POINTER, may include incrementing the terrestrial pointer value in the processor 24 so that the terrestrial data is organized into the terrestrial portion 30 relative to the top end 36 in a top-toward-the-bottom fashion. Such a downward addressing of the memory generally corresponds to incrementing a memory location pointer in response to each byte or word being written.

Step 340, SATELLITE SIGNAL DETECTED?, may include the receiver 20 determining that the satellite signal 16 is being received with, for example, sufficient signal strength or signal to noise ration to be suitable for generating or contributing to a receiver signal output by the receiver 20.

Step 345, SATELLITE FORMAT FIT INITIAL MEMORY?, may include determining if the satellite signal 16 being received has a format that corresponds to the initial memory configuration established in step 305. If the memory configuration is suitable (YES), the method 300 proceeds to step 360. If not (NO), then the satellite portion 32 may need to be reallocated.

Step 350, REALLOCATE SATELLITE MEMORY, may include the processor 24 adjusting the size of the satellite alignment buffer (48A-C) and/or the satellite interleaver buffer (50A-C) to provide sufficient memory for processing the satellite signal 16.

Step 355, SET SATELLITE POINTER TO BOTTOM, may include a satellite pointer value (not shown) in the processor 24 to a memory address corresponding to the bottom of the memory 28. Alternatively, step 355 may be shown in Fig. 3 as SET SATELLITE POINTER TO FIRST LOCATION, and so the satellite pointer value may be set to a memory address corresponding to the first location 52.

Step 360, STORE SATELLITE DATA, may include storing satellite data from the satellite signal 16 in a satellite portion 32 of the memory 28, for example at the location in the memory corresponding to the satellite pointer value.

Step 365, DECREMENT SATELLITE POINTER, may include decrementing the satellite pointer value in the processor 24 so that the satellite data is loaded into the satellite portion 32 in a bottom-toward-the-top fashion. Such an upward filling the memory in the upward direction generally corresponds to decrementing a memory location pointer in response to each byte or word being written. If the alternative step 355 were performed so that the satellite pointer value was set to a memory address corresponding to the first location 52, then step 365 would be changed correspondingly to read INCREMENT SATELLITE POINT, and so the satellite portion 32 would be addressed relative to the first location 52 in a downward direction as is the case for the terrestrial portion 30.

Accordingly, a communication system (the system 10), a receiver 20 for the system 10 and a method 300 of operating a memory 28 used to store received data being processed in a hybrid broadcast receiver (the receiver 20) configured to receive both a terrestrial signal 12 broadcast by a terrestrial transmitter 14 and a satellite signal 16 broadcast by a satellite transmitter 18 is provided. The memory 28 is operated to store two distinct groups of data by writing those distinct groups into memory 28 so any unused portion of the memory is located between the two distinct groups. Such a memory management strategy helps to prevent undesirable dropouts or muting by the receiver if the format of the terrestrial signal 12 or the satellite signal 16 changes or turns out to be different than expected.

While this invention has been described in terms of the preferred embodiments thereof, it is not intended to be so limited, but rather only to the extent set forth in the claims that follow.

## Claims

1. A hybrid broadcast receiver (20) configured to receive both a terrestrial signal (12) broadcast by a terrestrial transmitter (14) and a satellite signal (16) broadcast by a satellite transmitter (18), said receiver (20) comprising:
a processor (24) configured to process terrestrial data received from the terrestrial signal (12) and satellite data received from the satellite signal (16); and
a memory (28) coupled to the processor (24) effective to store the terrestrial data and the satellite data, wherein the processor (24) is configured to
store terrestrial data from the terrestrial signal (12) in a terrestrial portion (30) of the memory (28), wherein the terrestrial portion (30) includes a top end (36) of the memory (28), and
store satellite data from the satellite signal (16) in a satellite portion (32) of the memory (28), wherein the satellite portion (32) includes a bottom end (38) of the memory (28). wherein the processor (24) is further configured to
store terrestrial data from the terrestrial signal (12) in the terrestrial portion (30) of the memory (28) by associating a first terrestrial address with the top end (36) of the memory (28), and associating subsequent terrestrial addresses by incrementing a terrestrial address pointer relative to the first terrestrial address, and
store satellite data from the satellite signal (16) in the satellite portion (32) of the memory (28) by associating a first satellite address with the bottom end (38) of the memory (28), and associating subsequent satellite addresses by decrementing a satellite address pointer relative to the first satellite address.

2. A hybrid broadcast receiver (20) configured to receive both a terrestrial signal (12) broadcast by a terrestrial transmitter (14) and a satellite signal (16) broadcast by a satellite transmitter (18), said receiver (20) comprising:
a processor (24) configured to process terrestrial data received from the terrestrial signal (12) and satellite data received from the satellite signal (16); and
a memory (28) coupled to the processor (24) effective to store the terrestrial data and the satellite data, wherein the processor (24) is configured to
store terrestrial data from the terrestrial signal (12) in a terrestrial portion (30) of the memory (28), wherein the terrestrial portion (30) includes a bottom end (36) of the memory (28), and
store satellite data from the satellite signal (16) in a satellite portion (32) of the memory (28), wherein the satellite portion (32) includes a top end (38) of the memory (28).
wherein the processor (24) is further configured to
store terrestrial data from the terrestrial signal (12) in the terrestrial portion (30) of the memory (28) by associating a first terrestrial address with the top bottom end (36) of the memory (28), and associating subsequent terrestrial addresses by decrementing a terrestrial address pointer relative to the first terrestrial address, and
store satellite data from the satellite signal (16) in the satellite portion (32) of the memory (28) by associating a first satellite address with the top end (38) of the memory (28), and associating subsequent satellite addresses by incrementing a satellite address pointer relative to the first satellite address.

3. The receiver (20) in accordance with claim 1, wherein an unused portion (34) of the memory (28) is characterized as being between the terrestrial portion (30) and the satellite portion (32)

4. The receiver (20) in accordance with claim 1, wherein the terrestrial portion (30) of the memory (28) comprises a terrestrial alignment buffer (44A) and a terrestrial interleaver buffer (46A), and the satellite portion (32) of the memory (28) comprises a satellite alignment buffer (48A) and a satellite interleaver buffer (50A).

5. A method (300) of operating a memory (28) used to store received data being processed in a hybrid broadcast receiver (20) configured to receive both a terrestrial signal (12) broadcast by a terrestrial transmitter (14) and a satellite signal (16) broadcast by a satellite transmitter (18), said method (300) comprising:
storing (330) terrestrial data from the terrestrial signal (12) in a terrestrial portion (30) of the memory (28), wherein the terrestrial portion (30) includes a top end (36) of the memory (28), and
storing (360) satellite data from the satellite signal (16) in a satellite portion (32) of the memory (28), wherein the satellite portion (32) includes a bottom end (38) of the memory (28) characterized wherein
the step of storing terrestrial data from the terrestrial signal (12) in the terrestrial portion (30) of the memory (28) includes associating (320, 325) a first terrestrial address with the top end (36) of the memory (28), and associating subsequent terrestrial addresses by incrementing a terrestrial address pointer relative to the first terrestrial address, and
the step of storing satellite data from the satellite signal (16) in the satellite portion (32) of the memory (28) includes associating (350, 355) a first satellite address with the bottom end (38) of the memory (28), and associating subsequent satellite addresses by decrementing a satellite address pointer relative to the first satellite address.

6. A method (300) of operating a memory (28) used to store received data being processed in a hybrid broadcast receiver (20) configured to receive both a terrestrial signal (12) broadcast by a terrestrial transmitter (14) and a satellite signal (16) broadcast by a satellite transmitter (18), said method (300) comprising:
storing (330) terrestrial data from the terrestrial signal (12) in a terrestrial portion (30) of the memory (28), wherein the terrestrial portion (30) includes a bottom end (36) of the memory (28), and
storing (360) satellite data from the satellite signal (16) in a satellite portion (32) of the memory (28), wherein the satellite portion (32) includes a top end (38) of the memory (28) characterized wherein
the step of storing terrestrial data from the terrestrial signal (12) in the terrestrial portion (30) of the memory (28) includes associating (320, 325) a first terrestrial address with the bottom end (36) of the memory (28), and associating subsequent terrestrial addresses by decrementing a terrestrial address pointer relative to the first terrestrial address, and
the step of storing satellite data from the satellite signal (16) in the satellite portion (32) of the memory (28) includes associating (350, 355) a first satellite address with the top end (38) of the memory (28), and associating subsequent satellite addresses by incrementing a satellite address pointer relative to the first satellite address.

7. The method (300) in accordance with claim 5, wherein the terrestrial portion (30) comprises a terrestrial alignment buffer (44A) and a terrestrial interleaver buffer (46A), and the satellite portion (32) comprises a satellite alignment buffer (48A) and a satellite interleaver buffer (50A).

## Patentansprüche

1. Hybrid-Rundfunkempfänger (20), der zum Empfangen sowohl eines von einem terrestrischen Sender (14) ausgestrahlten terrestrischen Signals (12) als auch eines von einem Satellitensender (18) ausgestrahlten Satellitensignals (16) konfiguriert ist, wobei der genannte Empfänger (20) Folgendes aufweist:
einen Prozessor (24), der zum Verarbeiten von aus dem terrestrischen Signal (12) erhaltenen terrestrischen Daten und aus dem Satellitensignal (16) erhaltenen Satellitendaten konfiguriert ist, und
einen mit dem Prozessor (24) gekoppelten Speicher (28), der zum Speichern der terrestrischen Daten und der Satellitendaten wirksam ist, wobei der Prozessor (24) konfiguriert ist zum
Speichern von terrestrischen Daten aus dem terrestrischen Signal (12) in einem terrestrischen Teil (30) des Speichers (28), wobei der terrestrische Teil (30) ein oberes Ende (36) des Speichers (28) beinhaltet, und
Speichern von Satellitendaten aus dem Satellitensignal (16) in einem Satellitenteil (32) des Speichers (28), wobei der Satellitenteil (32) ein unteres Ende (38) des Speichers (28) beinhaltet, wobei der Prozessor (24) ferner konfiguriert ist zum
Speichern von terrestrischen Daten aus dem terrestrischen Signal (12) in dem terrestrischen Teil (30) des Speichers (28) durch Assoziieren einer ersten terrestrischen Adresse mit dem oberen Ende (36) des Speichers (28) und Assoziieren nachfolgender terrestrischer Adressen durch Inkrementieren eines terrestrischen Adresszeigers relativ zu der ersten terrestrischen Adresse und
Speichern von Satellitendaten aus dem Satellitensignal (16) in dem Satellitenteil (32) des Speichers (28) durch Assoziieren einer ersten Satellitenadresse mit dem unteren Ende (38) des Speichers (28) und Assoziieren nachfolgender Satellitenadressen durch Dekrementieren eines Satellitenadresszeigers relativ zu der ersten Satellitenadresse.

2. Hybrid-Rundfunkempfänger (20), der zum Empfangen sowohl eines von einem terrestrischen Sender (14) ausgestrahlten terrestrischen Signals (12) als auch eines von einem Satellitensender (18) ausgestrahlten Satellitensignals (16) konfiguriert ist, wobei der genannte Empfänger (20) Folgendes aufweist:
einen Prozessor (24), der zum Verarbeiten von aus dem terrestrischen Signal (12) erhaltenen terrestrischen Daten und aus dem Satellitensignal (16) erhaltenen Satellitendaten konfiguriert ist, und
einen mit dem Prozessor (24) gekoppelten Speicher (28), der zum Speichern der terrestrischen Daten und der Satellitendaten wirksam ist, wobei der Prozessor (24) konfiguriert ist zum
Speichern von terrestrischen Daten aus dem terrestrischen Signal (12) in einem terrestrischen Teil (30) des Speichers (28), wobei der terrestrische Teil (30) ein unteres Ende (36) des Speichers (28) beinhaltet, und
Speichern von Satellitendaten aus dem Satellitensignal (16) in einem Satellitenteil (32) des Speichers (28), wobei der Satellitenteil (32) ein oberes Ende (38) des Speichers (28) beinhaltet,
wobei der Prozessor (24) ferner konfiguriert ist zum Speichern von terrestrischen Daten aus dem terrestrischen Signal (12) in dem terrestrischen Teil (30) des Speichers (28) durch Assoziieren einer ersten terrestrischen Adresse mit dem oberen unteren Ende (36) des Speichers (28) und Assoziieren nachfolgender terrestrischer Adressen durch Dekrementieren eines terrestrischen Adresszeigers relativ zu der ersten terrestrischen Adresse, und
Speichern von Satellitendaten aus dem Satellitensignal (16) in dem Satellitenteil (32) des Speichers (28) durch Assoziieren einer ersten Satellitenadresse mit dem oberen Ende (38) des Speichers (28) und Assoziieren nachfolgender Satellitenadressen durch Inkrementieren eines Satellitenadresszeigers relativ zu der ersten Satellitenadresse.

3. Empfänger (20) nach Anspruch 1, wobei ein unbenutzter Teil (34) des Speichers (28) **dadurch gekennzeichnet ist, dass** er sich zwischen dem terrestrischen Teil (30) und dem Satellitenteil (32) befindet.

4. Empfänger (20) nach Anspruch 1, wobei der terrestrische Teil (30) des Speichers (28) einen terrestrischen Ausrichtungspuffer (44A) und einen terrestrischen Interleaver-Puffer (46A) aufweist und der Satellitenteil (32) des Speichers (28) einen Satelliten-Ausrichtungspuffer (48A) und einen Satelliten-Interleaver-Puffer (50A) aufweist.

5. Verfahren (300) zum Betreiben eines Speichers (28), der zum Speichern empfangener Daten verwendet wird, die in einem Hybrid-Rundfunkempfänger (20) verarbeitet werden, der zum Empfangen sowohl eines von einem terrestrischen Sender (14) ausgestrahlten terrestrischen Signals (12) als auch eines von einem Satellitensender (18) ausgestrahlten Satellitensignals (16) konfiguriert ist, wobei das genannte Verfahren (300) Folgendes aufweist:
Speichern (330) von terrestrischen Daten aus dem terrestrischen Signal (12) in einem terrestrischen Teil (30) des Speichers (28), wobei der terrestrische Teil (30) ein oberes Ende (36) des Speichers (28) beinhaltet, und
Speichern (360) von Satellitendaten aus dem Satellitensignal (16) in einem Satellitenteil (32) des Speichers (28), wobei der Satellitenteil (32) ein unteres Ende (38) des Speichers (28) beinhaltet, **dadurch gekennzeichnet, dass**
der Schritt des Speicherns von terrestrischen Daten aus dem terrestrischen Signal (12) in dem terrestrischen Teil (30) des Speichers (28) Assoziieren (320, 325) einer ersten terrestrischen Adresse mit dem oberen Ende (36) des Speichers (28) und Assoziieren nachfolgender terrestrischer Adressen durch Inkrementieren eines terrestrischen Adresszeigers relativ zu der ersten terrestrischen Adresse beinhaltet und
der Schritt des Speicherns von Satellitendaten aus dem Satellitensignal (16) in dem Satellitenteil (32) des Speichers (28) Assoziieren (350, 355) einer ersten Satellitenadresse mit dem unteren Ende (38) des Speichers (28) und Assoziieren nachfolgender Satellitenadressen durch Dekrementieren eines Satellitenadresszeigers relativ zu der ersten Satellitenadresse beinhaltet.

6. Verfahren (300) zum Betreiben eines Speichers (28), der zum Speichern empfangener Daten verwendet wird, die in einem Hybrid-Rundfunkempfänger (20) verarbeitet werden, der zum Empfangen sowohl eines von einem terrestrischen Sender (14) ausgestrahlten terrestrischen Signals (12) als auch eines von einem Satellitensender (18) ausgestrahlten Satellitensignals (16) konfiguriert ist, wobei das genannte Verfahren (300) Folgendes aufweist:
Speichern (330) von terrestrischen Daten aus dem terrestrischen Signal (12) in einem terrestrischen Teil (30) des Speichers (28), wobei der terrestrische Teil (30) ein unteres Ende (36) des Speichers (28) beinhaltet, und
Speichern (360) von Satellitendaten aus dem Satellitensignal (16) in einem Satellitenteil (32) des Speichers (28), wobei der Satellitenteil (32) ein oberes Ende (38) des Speichers (28) beinhaltet, **dadurch gekennzeichnet, dass**
der Schritt des Speicherns von terrestrischen Daten aus dem terrestrischen Signal (12) in dem terrestrischen Teil (30) des Speichers (28) Assoziieren (320, 325) einer ersten terrestrischen Adresse mit dem unteren Ende (36) des Speichers (28) und Assoziieren nachfolgender terrestrischer Adressen durch Dekrementieren eines terrestrischen Adresszeigers relativ zu der ersten terrestrischen Adresse beinhaltet und
der Schritt des Speicherns von Satellitendaten aus dem Satellitensignal (16) in dem Satellitenteil (32) des Speichers (28) Assoziieren (350, 355) einer ersten Satellitenadresse mit dem oberen Ende (38) des Speichers (28) und Assoziieren nachfolgender Satellitenadressen durch Inkrementieren eines Satellitenadresszeigers relativ zu der ersten Satellitenadresse beinhaltet.

7. Verfahren (300) nach Anspruch 5, wobei der terrestrische Teil (30) einen terrestrischen Ausrichtungspuffer (44A) und einen terrestrischen Interleaver-Puffer (46A) aufweist und der Satellitenteil (32) einen Satelliten-Ausrichtungspuffer (48A) und einen Satelliten-Interleaver-Puffer (50A) aufweist.

## Revendications

1. Récepteur radio hybride (20) configuré pour recevoir à la fois un signal terrestre (12) diffusé par un émetteur terrestre (14) et un signal satellitaire (16) diffusé par un émetteur satellite (18), ledit récepteur (20) comprenant :
un processeur (24) configuré pour traiter des données terrestres reçues du signal terrestre (12) et des données satellitaires reçues du signal satellitaire (16) ; et
une mémoire (28) couplée au processeur (24) et qui est à même de stocker les données terrestres et les données satellitaires, dans lequel le processeur (24) est configuré pour :
stocker des données terrestres issues du signal terrestre (12) dans une partie terrestre (30) de la mémoire (28), dans lequel la partie terrestre (30) comprend une extrémité supérieure (36) de la mémoire (28), et
stocker des données satellitaires du signal satellitaire (16) dans une partie satellitaire (32) de la mémoire (28), dans lequel la partie satellitaire (32) comprend une extrémité inférieure (38) de la mémoire (28), le processeur (24) étant par ailleurs configuré pour :
stocker des données terrestres issues du signal terrestre (12) dans la partie terrestre (30) de la mémoire (28) en associant une première adresse terrestre à l'extrémité supérieure (36) de la mémoire (28) et en associant des adresses terrestres ultérieures par incrémentation d'un pointeur d'adresses terrestres par rapport à la première adresse terrestre, et
stocker des données satellitaires issues du signal satellitaire (16) dans la partie satellitaire (32) de la mémoire (28) en associant une première adresse satellitaire à l'extrémité inférieure (38) de la mémoire (28) et en associant des adresses satellitaires ultérieures par décrémentation d'un pointeur d'adresses satellitaires par rapport à la première adresse satellitaire.

2. Récepteur radio hybride (20) configuré pour recevoir à la fois un signal terrestre (12) diffusé par un émetteur terrestre (14) et un signal satellitaire (16) diffusé par un émetteur satellite (18), ledit récepteur (20) comprenant :
un processeur (24) configuré pour traiter des données terrestres reçues du signal terrestre (12) et des données satellitaires reçues du signal satellitaire (16) ; et
une mémoire (28) couplée au processeur (24) et qui est à même de stocker les données terrestres et les données satellitaires, dans lequel le processeur (24) est configuré pour :
stocker des données terrestres issues du signal terrestre (12) dans une partie terrestre (30) de la mémoire (28), dans lequel la partie terrestre (30) comprend une extrémité inférieure (36) de la mémoire (28) et
stocker des données satellitaires issues du signal satellitaire (16) dans une partie satellitaire (32) de la mémoire (28), dans lequel la partie satellitaire (32) comprend une extrémité supérieure (38) de la mémoire (28),
dans lequel le processeur (24) est encore configuré pour :
stocker des données terrestres issues du signal terrestre (12) dans la partie terrestre (30) de la mémoire (28) en associant une première adresse terrestre à l'extrémité supérieure inférieure (36) de la mémoire (28) et en associant des adresses terrestres ultérieures par décrémentation d'un pointeur d'adresses terrestres par rapport à la première adresse terrestre, et
stocker des données satellitaires du signal satellitaire (16) dans la partie satellitaire (32) de la mémoire (28) en associant une première adresse satellitaire à l'extrémité supérieure (38) de la mémoire (28) et en associant des adresses satellitaires ultérieures par incrémentation d'un pointeur d'adresses satellitaires par rapport à la première adresse satellitaire.

3. Récepteur (20) selon la revendication 1, dans lequel une partie inutilisée (34) de la mémoire (28) est caractérisée comme étant comprise entre la partie terrestre (30) et la partie satellitaire (32).

4. Récepteur (20) selon la revendication 1, dans lequel la partie terrestre (30) de la mémoire (28) comprend un tampon d'alignement terrestre (44A) et un tampon intercalaire terrestre (46A) et la partie satellitaire (32) de la mémoire (28) comprend un tampon d'alignement satellitaire (48A) et un tampon intercalaire satellitaire (50A).

5. Procédé (300) de fonctionnement d'une mémoire (28) utilisée pour stocker des données reçues qui sont traitées dans un récepteur radio hybride (20) configuré pour recevoir à la fois un signal terrestre (12) diffusé par un émetteur terrestre (14) et un signal satellitaire (16) diffusé par un émetteur satellite (18), ledit procédé (300) comprenant les étapes consistant à :
stocker (330) des données terrestres issues du signal terrestre (12) dans une partie terrestre (30) de la mémoire (28), dans lequel la partie terrestre (30) comprend une extrémité supérieure (36) de la mémoire (28) et
stocker (360) des données satellitaires issues du signal satellitaire (16) dans une partie satellitaire (32) de la mémoire (28), dans lequel la partie satellitaire (32) comprend une extrémité inférieure (38) de la mémoire (28), **caractérisé en ce que** :
l'étape de stockage de données terrestres issues du signal terrestre (12) dans la partie terrestre (30) de la mémoire (28) comprend l'association (320, 325) d'une première adresse terrestre avec l'extrémité supérieure (36) de la mémoire (28) et l'association d'adresses terrestres ultérieures par incrémentation d'un pointeur d'adresses terrestres par rapport à la première adresse terrestre, et
l'étape de stockage de données satellitaires issues du signal satellitaire (16) dans la partie satellitaire (32) de la mémoire (28) comprend l'association (350, 355) d'une première adresse satellitaire à l'extrémité inférieure (38) de la mémoire (28) et l'association d'adresses satellitaires ultérieures par décrémentation d'un pointeur d'adresses satellitaires par rapport à la première adresse satellitaire.

6. Procédé (300) de fonctionnement d'une mémoire (28) utilisée pour stocker des données reçues qui sont traitées dans un récepteur radio hybride (20) configuré pour recevoir à la fois un signal terrestre (12) diffusé par un émetteur terrestre (14) et un signal satellitaire (16) diffusé par un émetteur satellite (18), ledit procédé (300) comprenant les étapes consistant à :
stocker (330) des données terrestres issues du signal terrestre (12) dans une partie terrestre (30) de la mémoire (28), dans lequel la partie terrestre (30) comprend une extrémité inférieure (36) de la mémoire (28) et
stocker (360) des données satellitaires issues du signal satellitaire (16) dans une partie satellitaire (32) de la mémoire (28), dans lequel la partie satellitaire comprend une extrémité supérieure (38) de la mémoire (28), **caractérisé en ce que** :
l'étape de stockage de données terrestres issues du signal terrestre (12) dans la partie terrestre (30) de la mémoire (28) comprend l'association (320, 325) d'une première adresse terrestre avec l'extrémité inférieure (36) de la mémoire (28) et l'association d'adresses terrestres ultérieures par décrémentation d'un pointeur d'adresses terrestres par rapport à la première adresse terrestre et
l'étape de stockage de données satellitaires issues du signal satellitaire (16) dans la partie satellitaire (32) de la mémoire (28) comprend l'association (350, 355) d'une première adresse de satellite à l'extrémité supérieure (38) de la mémoire (28) et l'association d'adresses satellitaires ultérieures par incrémentation d'un pointeur d'adresses satellitaires par rapport à la première adresse satellitaire.

7. Procédé (300) selon la revendication 5, dans lequel la partie terrestre (30) comprend un tampon d'alignement terrestre (44A) et un tampon intercalaire terrestre (46A) et la partie satellitaire (32) comprend un tampon d'alignement satellitaire (48A) et un tampon intercalaire satellitaire (50A).
